# EUROPÄISCHE PATENTANMELDUNG

(11) **EP 1 710 740 A1**
(43) Veröffentlichungstag der Anmeldung: **11.10.2006**
(21) Anmeldenummer: 06006744.4
(22) Anmeldetag: 30.03.2006
(51) Int. Cl.: G06Q 10/00

(54) **Verfahren und System zur Planung und Erfassung von an unterschiedlichen Objekten von Mitarbeitern auszuführenden Tätigkeiten und Datenhandgerät**

(30) Priorität: 30.03.2005 EP 05006855
(71) Anmelder: Engert & Partner GmbH & Co KG, 52072 Aachen (DE)
(72) Erfinder: Antons, Armin, Dr., 52066 Aachen (DE); Bischops, Horst Michael, 52078 Aachen (DE); Krausz, Michael, 52062 Aachen (DE)
(74) Vertreter: Verhasselt, Jörn

(57) **Zusammenfassung**

Die Erfindung betrifft ein Verfahren zum Planen und Erfassen von an unterschiedlichen Objekten von Mitarbeitern auszuführenden Tätigkeiten in Echtzeit, insbesondere in einem Alten- oder Pflegeheim, bei dem für jeden Mitarbeiter und für jede Tätigkeit jeweils ein Profil in einem Server (4) gespeichert wird, das die Berechtigung des Mitarbeiters für bestimmte Tätigkeiten bzw. Anforderungen an die Berechtigung des Mitarbeiters beschreibt, Aufgabenpläne für durchzuführende Tätigkeiten entsprechend vorbestimmten Vorgaben computerunterstützt erstellt und im Server (4) gespeichert werden, an einem Eingabegerät (7) mit einem Display (10) und einer Dateneingabevorrichtung offene Tätigkeiten des jeweiligen Aufgabeplans im Display (10) entsprechend dem Profil des betätigenden Mitarbeiters, dem Profil der Tätigkeiten und dem Abarbeitungsstatus aufgerufen und anzeigt werden, und von betätigenden Mitarbeitern mindestens eine durchgeführte Tätigkeit als Erledigung in das Eingabegerät (7) eingegeben, im Display (10) angezeigt, an den Server (4) weitergeleitet und dort dokumentarisch abgelegt werden, wobei die vorbestimmten Vorgaben der durchzuführenden Tätigkeiten ein den Tätigkeiten zugeordnetes Zeitfenster und eine den Tätigkeiten zugeordnete Priorität umfassen, die in einer Datenbank abgelegt sind, und als Eingabegerät (7) für jeden Mitarbeiter ein mitgeführtes, elektrisch selbstversorgtes, drahtlos mit dem Server (4) kommunizierendes Datenhandgerät (7) bereitgestellt wird, und für eine drahtlose Kommunikation zwischen den Datenhandgeräten (7) und dem Server (4) ein lokales mindestens am Ort der Tätigkeit vorhandenes Funknetz verwendet wird, und ein die mindestens eine bei der Eingabe als erledigt eingegebene Tätigkeit umfassender Datensatz gebildet wird, der den Zeitpunkt der Eingabe für die mindestens eine Tätigkeit enthält, wobei die von einem Mitarbeiter als durchgeführt in ein Datenhandgerät mindestens eine, eingegebene Tätigkeit anderen Mitarbeitern bei entsprechendem objektbezogenem Aufruf zur Verfügung gestellt wird, sowie ein entsprechendes System und ein Datenhandgerät (7) dafür.

## Beschreibung

Die Erfindung betrifft ein Verfahren und ein System zur Planung und Erfassung von an unterschiedlichen Objekten von Mitarbeitern auszuführenden Tätigkeiten und ein Datenhandgerät nach den Oberbegriffen der Ansprüche 1, 12 und 22.

Das Planen, Ausführen, Erfassen, Dokumentieren, Auswerten und/oder Abrechnen von Tätigkeiten, die von Mitarbeitern in produzierenden oder Dienstleistungsbetrieben an unterschiedlichen Objekten wie z.B. Personen oder Gegenständen auszuführen sind, ist zeitaufwendig, fehlerträchtig, komplex und inflexibel. Ferner ist die Erfassung von typischen Ausführungsdauern für bestimmte Tätigkeiten schwierig bzw. nicht möglich. Dies wird am Beispiel der stationären Pflege von Personen in Senioren- bzw. Pflegeheimen im folgenden erläutert.

Bisher ist es üblich, daß bei der Aufnahme einer Person im Senioren- bzw. Pflegeheim zunächst die Stammdaten wie Anamnese und Biographie aufgenommen sowie weitere die Person betreffende Informationen in einer zentralen Mappe schriftlich erfaßt werden. Nach dieser Informationssammlung werden anhand einer Bewertung des Ist-Zustands in mehreren Bereichen, beispielsweise entsprechend dem 13 Bereiche umfassenden AEDL-Pflegemodell nach Krohwinkel, Probleme erfaßt, beispielsweise im Bereich 2 "sich bewegen" des AEDL-Pflegemodells eine mangelhafte Beweglichkeit eines Arms, und jeweils Ziele, beispielsweise eine verbesserte Beweglichkeit des Arms, sowie Maßnahmen, beispielsweise eine Bewegungstherapie, zum Erreichen der Ziele definiert. Die Maßnahmen werden in Einzeltätigkeiten, beispielsweise bestimmte Übungen für den Arm zu bestimmten Zeitpunkten, aufgeschlüsselt und gegebenenfalls mit Ausführungshinweisen versehen in Zeilen eines Aufgabenplans eingetragen.

Die für eine Schicht verfügbaren Mitarbeiter des Seniorenheims werden ihrer Qualifikation, Berechtigung und Eignung entsprechend den Personen und den Tätigkeiten zugewiesen, um die Aufgabenpläne abzuarbeiten. Beispielsweise wird die Ausführung der Übungen für den Arm einem Physiotherapeuten und die Durchführung der Grundpflege einem Pfleger übertragen.

Bei einer schriftlichen Dokumentation der durchgeführten Tätigkeiten verbleiben die Aufgabenpläne zentral in der Mappe, so daß sich die Mitarbeiter die Tätigkeiten merken oder diese in eine eigene Planung übertragen müssen. Nach Ausführung der Tätigkeiten sind diese entsprechend den gesetzlichen Vorgaben zeitnah zu dokumentieren. Hierzu werden die durchgeführten und die nicht durchgeführten Tätigkeiten in den Spalten der Aufgabenlisten in der Mappe markiert, z.B. abgehakt und mit einem Kürzel des jeweiligen Mitarbeiters versehen, und gegebenenfalls Besonderheiten notiert. Dieser Prozeß ist fehlerträchtig, da die Mappe zentral aufbewahrt wird und die Mitarbeiter die Aufgabenliste daher abschreiben oder sich merken müssen. Eine Erfassung, wieviel Zeit auf eine Tätigkeit verwendet wurde, ist nicht möglich, obwohl eine Ermittlung der Zeit für eine bestimmte Tätigkeit wünschenswert ist für eine Planung bzw. Bewertung einzelner Tätigkeiten.

Aus US 6 640 212 B1 ist ein System zur Organisation von Informationen für ein Pflege- bzw. Altenheim bekannt, bei dem ein "Kiosksystem" zur Eingabe und Anzeige von Informationen verwendet wird. Das Kiosksystem ist im Wohnbereich des Pflege- bzw. Altenheims fest angeordnet. Nachteilig dabei ist, daß die Eingabe und das Abrufen von Tätigkeiten durch Mitarbeiter nur an diesem Standort erfolgen können. Dabei ergibt sich das Problem, daß Mitarbeiter erledigte Tätigkeiten vergessen einzugeben, oder Tätigkeiten mehrfach ausgeführt werden, da bis zum Zeitpunkt der Eingabe der Tätigkeit als "erledigt" ein weiterer Mitarbeiter die Tätigkeit ebenfalls ausführt.

Aus WO 02/00297 A2 ist ein Verfahren bekannt, bei dem eine Krankenschwester, die Kranke besucht, ein portables Handgerät verwendet. Über das Handgerät erhält die Krankenschwester morgens den von ihr abzuarbeitenden Tagesplan. Jeder Krankenschwester wird somit genau ein für sie im voraus angelegter fester Tagesplan am Anfang des Tages zur Abarbeitung gegeben. Eine Planung in Reaktion auf Änderungen wird nicht betrachtet. Eine Ermittlung der Zeitdauer für auszuführende Tätigkeiten ist nicht möglich.

Aus WO 2004/102457 A2 ist ein Verfahren für eine Planung von Tätigkeiten eines Pflegers bekannt, bei dem ein portables Handgerät verwendet wird. Die durchzuführenden Tätigkeiten werden für den vorbestimmten Pfleger geplant und diesem auf das Handgerät übermittelt. Eine flexible Planung, bei der Tätigkeiten von mehreren Pflegern durchgeführt werden können, ist nicht möglich, da Pfleger zu pflegenden Personen fest zugeordnet werden.

Aus US 2004/0078231 A1 ist ein Verfahren zur Anweisung und Dokumentation in Krankenhäusern bekannt, bei dem ein Plan für die Ausführung von Tätigkeiten einer bestimmten Krankenschwester erstellt werden kann. Eine flexible Planung und Erfassung von Tätigkeiten, die von unterschiedlichen Krankenschwestern durchgeführt werden können, wird nicht betrachtet.

Aus US 2002/0165733 A1 ist ein Verfahren zum Erfassen von Tätigkeiten in einem Pflege- bzw. Altenheim bekannt, bei dem am zu erbringenden Ort der Tätigkeit jeweils eine Anzeige- und Dateneingabeeinrichtung vorhanden ist. Ein solches Verfahren ist kostenaufwendig, da jeder zu pflegenden Person eine Einrichtung zugeordnet werden muß. Ferner ist es den Pflegern nicht möglich, anstehende Tätigkeiten abzurufen, ohne bei einer zu pflegenden Person vor Ort zu sein.

Aus WO 02/01470 A1 ist ein elektronisches System bekannt, bei dem ein Arzt eine Diagnose auswählt, und das System eine zu der ausgewählten Diagnose entsprechende bevorzugte Behandlung auswählt.

Der Erfindung liegt daher die Aufgabe zugrunde, ein Verfahren und ein System zur Planung und Erfassung von an unterschiedlichen Objekten von Mitarbeitern auszuführenden Tätigkeiten und ein Datenhandgerät dafür zu schaffen, die einfacher sowie weniger anfällig für Fehler bei der Informationsweitergabe sind, die Mitarbeiter automatisiert unterstützen und weniger Arbeitskraft binden, sowie flexiblere Erfassungs- und Auswertungsmöglichkeiten bieten.

Diese Aufgabe wird entsprechend den Merkmalen der Ansprüche 1, 12 bzw. 22 gelöst.

Hierdurch wird ein Verfahren zum Planen und Erfassen von an unterschiedlichen Objekten von Mitarbeitern auszuführenden Tätigkeiten in Echtzeit geschaffen, bei dem für jeden Mitarbeiter und für jede Tätigkeit jeweils ein Profil in einem Server gespeichert wird, das die Berechtigung des Mitarbeiters für bestimmte Tätigkeiten bzw. Anforderungen an die Berechtigung des Mitarbeiters beschreibt, Aufgabenpläne für durchzuführende Tätigkeiten entsprechend vorbestimmten Vorgaben computerunterstützt erstellt und im Server gespeichert werden, für jeden Mitarbeiter ein mitgeführtes, elektrisch selbstversorgtes, drahtlos mit dem Server kommunizierendes Datenhandgerät, das jeweils ein Display und eine Dateneingabevorrichtung aufweist, bereitgestellt wird, das objektbezogen aufgerufen im Display offene Tätigkeiten des jeweiligen Aufgabenplans entsprechend dem Profil des betätigenden Mitarbeiters, dem Profil der Tätigkeiten und den Abarbeitungsstatus anzeigt, und von betätigenden Mitarbeitern durchgeführte Tätigkeiten als Erledigung in das Datenhandgerät eingegeben, im Display angezeigt, an den Server weitergeleitet und dort dokumentarisch abgelegt werden. Zur flexiblen Planung der Tätigkeiten sind zugeordnete Zeitfenster und Prioritäten vorgesehen, innerhalb derer bzw. mit welcher Wichtigkeit die Tätigkeit ausgeführt werden soll. Damit wird eine flexible Gestaltung des Aufgabenplans ermöglicht. Für die drahtlose Kommunikation wird vorzugsweise ein flächendeckendes WLAN, das zumindest an den Erbringungsorten der Tätigkeit vorhanden ist, verwendet. Die Kombination der Datenhandgeräte, von denen jeder Mitarbeiter eines mit sich führt, und die drahtlose Kommunikation am Ort der Erbringung der Tätigkeiten erlauben eine Echtzeitfähigkeit des Verfahrens, bei dem über die Dokumentation über den Server die erledigten Tätigkeiten anderen Mitarbeitern bei entsprechendem objektbezogenem Aufruf zur Verfügung gestellt werden. Zur Auswertung und weiteren Planung wird bei der Eingabe der mindestens einen als erledigt eingegebenen Tätigkeit ein Datensatz gebildet, der den Zeitpunkt der Eingabe für die mindestens eine Tätigkeit enthält. Eine einfache Auswertung insbesondere für die Zeitdauer einzelner Tätigkeiten ist so möglich.

Das Verfahren ist insbesondere in Pflegeeinrichtungen wie Seniorenheimen und Krankenhäusern einsetzbar. Es kann darüber hinaus zweckmäßigerweise überall dort eingesetzt werden, wo ein Mitarbeiterpool Objekten qualifikationsbasiert und flexibel zugeordnet werden muß, da beispielsweise allenfalls statistisch vorhersehbare, fallweise anfallende Probleme und Änderungen bei in einem wiederkehrenden Zeitraster auszuführenden Tätigkeiten zu berücksichtigen sind. Das Verfahren ist daher auch bei Zeitarbeitsfirmen, in Fabrikhallen, bei Gebäudemanagementdiensten usw. einsetzbar. Dabei können lokale und globale Funknetze (WLAN bzw. Handynetz) gemeinsam genutzt werden, um ein hybrides Funknetz zu schaffen. Hierdurch können Mitarbeiter flexibel zwischen einem stationärem Einsatz in einer Pflegeeinrichtung und einem Außendiensteinsatz beispielsweise zur Betreuung einer Person in ihrer eigenen Wohnung wechseln.

Durch die zentrale Speicherung, den dezentralen Zugriff und die Verfügbarkeit aktueller Informationen in Echtzeit, d.h. zeitlich schritthaltend mit dem Dienstleistungs- oder Produktionsprozeß, sind Aufgabenpläne automatisiert erstellbar, die entsprechend dem Profil des betätigenden Mitarbeiters, d.h. insbesondere seiner Qualifikation, seiner Berechtigung und/oder seiner Eignung für die Durchführung von Tätigkeiten, entsprechend dem Profil der Tätigkeiten, in dem die entsprechenden Anforderungen an einen Mitarbeiter beschrieben sind, und entsprechend dem Abarbeitungsstatus nur in einem Zeitraum tatsächlich anfallende Tätigkeiten umfassen. Das Planen, Ausführen, Erfassen, Dokumentieren, Auswerten und Abrechnen der Tätigkeiten ist nunmehr automatisiert und dadurch lückenloser, flexibler und einfacher sowie infolge der unmittelbaren elektronischen Informationsweitergabe anstelle einer Kommunikation über Papier und Gedächtnis weniger anfällig für Fehler, wodurch im Ergebnis erheblich weniger Arbeitskraft für die gleichen Tätigkeiten verwendet werden muß.

Zudem ist durch die Profile sichergestellt, daß Mitarbeitern nur Ihrer Qualifikation, ihrer Berechtigung und/oder ihrer Eignung entsprechende Tätigkeiten zugeteilt werden.

Die Aufgabenpläne werden zweckmäßigerweise unter Zugriff auf einen zentralen Systemkatalog mit strukturiert abrufbaren Tätigkeiten zusammengestellt. Beispielsweise enthält der Systemkatalog in einer dem AEDL-Pflegemodell entsprechenden Struktur Tätigkeiten, die bei der Pflegeplanung automatisiert und gegebenenfalls unter Ergänzung von Ausführungshinweisen zusammenstellbar und zeitlich planbar sind. Hierdurch wird die Erstellung der Aufgabenpläne und insbesondere die Pflegeplanung erheblich vereinfacht und sichergestellt, daß zumindest alle üblichen Tätigkeiten berücksichtigt werden.

Bevorzugt wird bei der Bildung des Datensatzes eine Kennung für den betätigenden Mitarbeiter aufgenommen, um eine einfache Planung, Erfassung und Abrechnung der durchgeführten Tätigkeiten einzelner Mitarbeiter zu ermöglichen.

Vorzugsweise werden bei der Bildung des Datensatzes Parameter in den Datensatz aufgenommen, um eine nach einzelnen Parametern sortierbare bzw. filterbare Aufstellung der Tätigkeiten zu erhalten. Ein zusätzlicher Parameter kann die Übernahmeform der Tätigkeit sein. Bei der Übernahmeform der Tätigkeit wird zwischen Vollübernahme, Teilübernahme, Hilfestellung und Anleitung unterschieden, die ein Maß dafür angeben, ob und wie der Bewohner bei der Tätigkeit mithilft. Als weiterer zusätzlicher Parameter kann die Pflegestufe des Bewohners vorgesehen sein.

Als Zeitfenster wird vorzugsweise ein Zeitbereich von mehreren Minuten oder Stunden, vorzugsweise eine Schichtlänge, insbesondere bevorzugt die Hälfte einer Schichtlänge, verwendet, um eine ausreichende Flexibilität und Anpassung bei durchzuführenden Tätigkeiten zu erhalten, die bei einer strikten Zuweisung von genauen Zeitpunkten, an denen Tätigkeiten durchzuführen sind, nicht gegeben ist. Für eine Tätigkeit wird demnach in der Regel kein starrer, fester Zeitpunkt zur Durchführung angegeben, sondern ein Zeitfenster zur Durchführung der Tätigkeit, in dem die Tätigkeit durchgeführt werden muß. Es wird auf eine zwingende Abarbeitungsreihenfolge verzichtet, um ein flexibles eigenverantwortliches Arbeiten der Mitarbeiter zu ermöglichen.

Bevorzugt werden die Zeitdauern zur Ausführung von einzelnen Tätigkeiten aus den Eingaben von als erledigt eingegebenen Tätigkeiten ermittelt, in dem ein lineares Gleichungssystem auf der Basis der Datensätze der als erledigt eingegebenen Tätigkeiten und der Zeitpunkte aufgestellt wird, an denen die Tätigkeiten als erledigt eingegeben wurden. Daraus kann eine mittlere Ausführungsdauer für Tätigkeiten aus dem Gleichungssystem berechnet werden.

Die offenen, erledigten und unerledigten Tätigkeiten eines Aufgabenplans werden zweckmäßigerweise optisch unterscheidbar und insbesondere in Zeilen angezeigt, die bei offenen Tätigkeiten in einer neutralen Farbe, beispielsweise schwarz, bei erledigten Tätigkeiten in einer anderen Farbe, beispielsweise grün, und bei unerledigten Tätigkeiten in einer dritten Farbe, einer Signalfarbe, beispielsweise rot, markiert sind. Hierdurch ist der Status des Aufgabenplans mit einem Blick erfaßbar.

Zweckmäßigerweise können einer Tätigkeit Bemerkungen handschriftlich und/oder als Sprachnotiz hinzugefügt werden. Hierdurch sind auch unvorhergesehene Ereignisse protokollierbar. Zudem wird die spätere Auswertung erleichtert.

Es kann vorgesehen sein, auf Basis der dokumentarisch im Server abgelegten Eingaben den Fortschritt der Abarbeitung der Aufgabenpläne für Objekte entsprechend vorgegebenen Kriterien, beispielsweise nach räumlicher Anordnung, in einer Graphik auf einem Datenhandgerät anzuzeigen. Hierdurch kann der Mitarbeitereinsatz flexibel an sich ändernde Anforderungen angepaßt werden, insbesondere von einer Station Mitarbeiter abgezogen und auf eine andere Station verlegt werden.

Zweckmäßigerweise werden den Objekten von den Datenhandgeräten abfragbare Transponder zugeordnet. Hierdurch ist ein Objekt ohne Benutzereingabe fehlerfrei und einfach identifizier- und die Aufgabenliste in Reaktion auf die Identifizierung unmittelbar anzeigbar.

Zweckmäßigerweise wird der Ort der Datenhandgeräte festgestellt. Hierdurch ist es jederzeit möglich festzustellen, wo die Mitarbeiter sich befinden. Die Feststellung, wo der Mitarbeiter sich zu einem bestimmten Zeitpunkt befindet, kann beispielsweise für die Abrechnung oder die Ermittlung der Zeitdauer einer Tätigkeit verwendet werden. So kann beispielsweise zum Zeitpunkt der Eingabe von als erledigt zu kennzeichnenden Tätigkeiten der Ort des Mitarbeiters festgestellt werden, um die Eingabe mit der Tätigkeit zu korrelieren, indem bei einem Ort entfernt von der zu erbringenden, als erledigt eingegebenen Tätigkeit, davon ausgegangen werden kann, daß seit der Erledigung der Tätigkeit eine entsprechende Zeit vergangen ist.

Zweckmäßigerweise sendet der Server zum Alarmieren eines Datenhandgeräts unaufgefordert Daten an das Datenhandgerät. Hierdurch können gegebenenfalls mehrere Mitarbeiter mit eiligen Informationen versorgt werden und insbesondere im Notfall unmittelbar eine neue Aufgabenliste erhalten.

Zweckmäßigerweise wird eine Informationssammlung, eine Planung von Aufgaben basierend auf gesammelten Informationen, eine Erfassung durchgeführter Tätigkeiten unter Verwendung der Datenhandgeräte, eine Evaluation der Wirksamkeit der durchgeführten Tätigkeiten nebst Anpassung der Planung und/oder eine Auswertung der durchgeführten Tätigkeiten durchgeführt.

Ferner werden ein entsprechendes System und ein elektrisch selbstversorgtes Datenhandgerät mit einem Display und einer Dateneingabevorrichtung zur drahtlosen Kommunikation mit dem System geschaffen.

Weitere Ausgestaltungen der Erfindung sind der nachfolgenden Beschreibung und den Unteransprüchen zu entnehmen.

Die Erfindung wird nachstehend anhand von in den beigefügten Figuren dargestellten Ausführungsbeispielen näher erläutert.
Fig. 1 illustriert ein erfindungsgemäßes System am Beispiel eines Seniorenheims.
Fig. 2 zeigt schematisch den Aufbau eines erfindungsgemäßen Systems.
Fig. 3 illustriert ein erfindungsgemäßes Datenhandgerät für das System der Fig. 1.
Fig. 4 illustriert Verfahrensabläufe in einem Seniorenheim.
Fig. 5 illustriert ein erfindungsgemäßes Verfahren.
Fig. 6 und 7 zeigen Graphiken für jeweils verschiedene Auswertungen.
Fig. 8 zeigt schematisch Eingaben eines Mitarbeiters über einen Zeitverlauf.

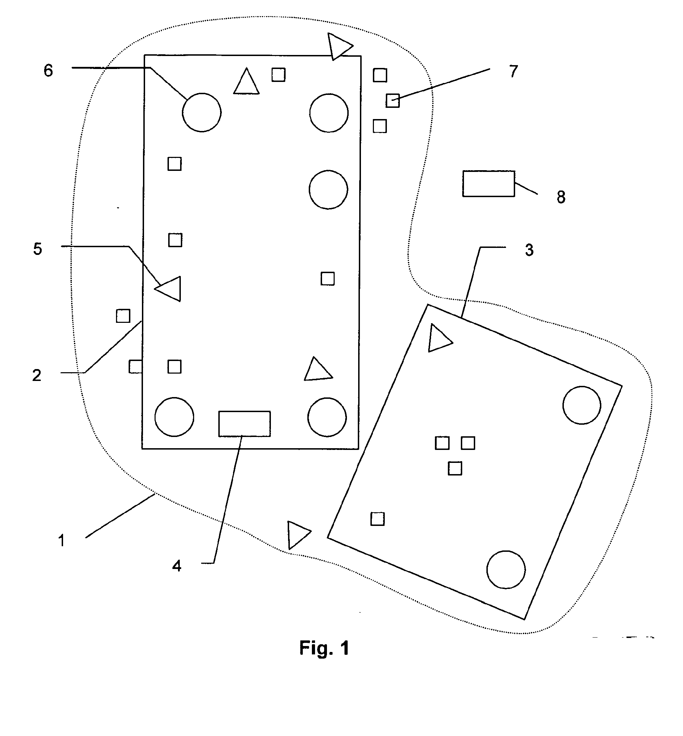

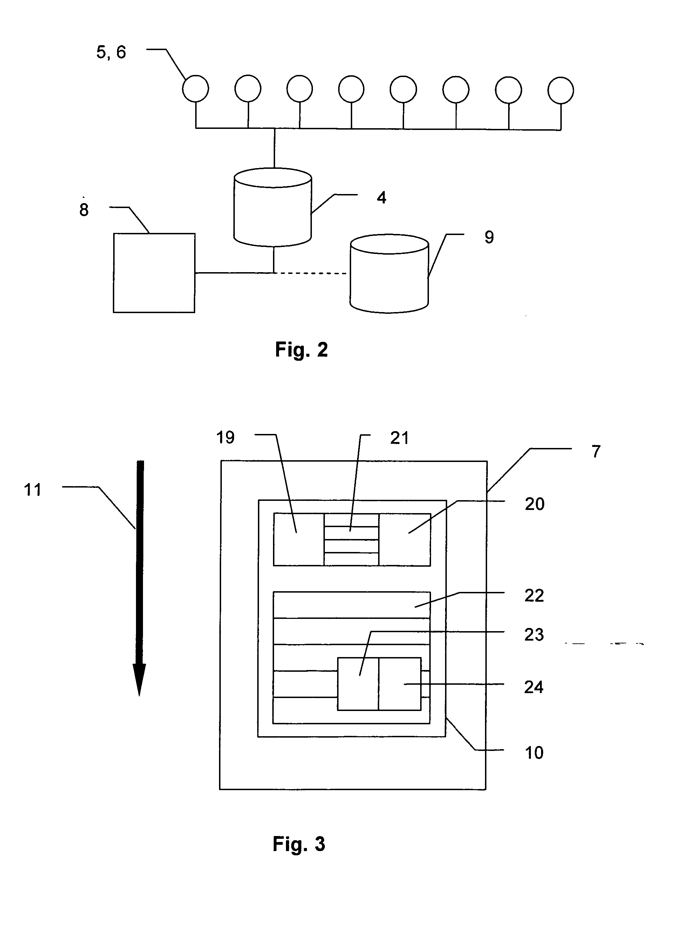

Das in Fig. 1 dargestellte System zum Managen von an unterschiedlichen Objekten von Mitarbeitern auszuführenden Tätigkeiten in Echtzeit, d.h. zumindest schritthaltend mit dem jeweiligen Dienstleistungs- oder Produktionsprozeß, ist in einem hier begrenzten Raumbereich 1 umfassend den Innenbereich und gegebenenfalls die unmittelbar angrenzende Umgebung beispielsweise eines Seniorenheims 2, eines Krankenhauses, einer Fabrikhalle od. dgl. einschließlich eines angeschlossenen Parks 3, Parkplatzes, Lagers od. dgl. realisiert. Verteilt über den Raumbereich 1 sind mehrere mit einem Server 4 zweckmäßigerweise über ein den gesamten Raumbereich 1 abdeckendes WLAN verbundene und hier durch diesen gesteuerte Sender 5 und Empfänger 6 zur drahtlosen Kommunikation mit elektrisch selbstversorgten Datenhandgeräten 7, die durch Mitarbeiter, hier Pflegepersonal, bedient werden. Der Server 4 kann einen oder mehrere Computer oder ein Computernetzwerk od. dgl. umfassen, und weist zudem gegebenenfalls Schnittstellen für weitere vorhandene Computersysteme 8 z.B. zur Abrechnung, Heimverwaltung usw. auf, vgl. Fig. 2. Die Sender 5 und die Empfänger 6 können auch kombinierte Sendeempfänger sein.

Im Server 4 oder gegebenenfalls im Computersystem 8 sind Stammdaten über im Raumbereich 1 anwesende Personen, die Senioren, sowie weitere Informationen zentral gespeichert. Die Stammdaten und Informationen umfassen zweckmäßigerweise die Biographie und die Anamnese der Personen sowie Pflegedaten wie etwa täglich durchzuführende Pflegemaßnahmen, Untersuchungen usw. und/oder die Protokollierung durchgeführter Pflegemaßnahmen, der darauf verwendeten Zeit usw.. Vorzugsweise sind hier auch Profile des Pflegepersonals gespeichert sowie ein Schichtplan.

Der Zugriff auf die im Server 4 gespeicherten Daten erfolgt über die Datenhandgeräte 7, vgl. Fig. 3. Diese sind insbesondere Personal Digital Assistants (PDAs) wie sie z.B. von der Firma Palm angeboten werden und umfassen eine Bildwiedergabevorrichtung 10 insbesondere in Form eines hintergrundbeleuchteten Farb-LC-Displays und gegebenenfalls eine Tonwiedergabevorrichtung. Zur Steuerung durch den Benutzer ist zweckmäßigerweise eine berührungsempfindliche Displayoberfläche vorgesehen, über die mit einem Stift 11 handschriftlich Eingaben erfolgen können. Gegebenenfalls sind verschiedene Datenhandgeräte 7 gleichzeitig im Einsatz, beispielsweise kleine, ständig mitführbare PDAs für die Visite sowie größere PDAs oder TabletPCs, die eine große berührungsempfindliche Bildwiedergabevorrichtung 10 umfassen und insbesondere raumgebunden beispielsweise zur Planung und Auswertung eingesetzt werden. Ferner ist in jedem Datenhandgerät 7 ein Empfänger und ein Sender eingebaut, die zusammen über die Sender 5 und Empfänger 6 den drahtlosen Datenaustausch mit dem Server 4 ermöglichen. Die Datenhandgeräte 7 können auch mit einer Lesevorrichtung für RFID-Transponder versehen sein, um beispielsweise Räume, Personen und/oder Medikamente u.dgl. automatisiert zu identifizieren. Ferner können eine Kamera oder andere zusätzliche Einrichtungen, beispielsweise ein Mobiltelefon, in den Datenhandgeräten integriert sein.

Der Datenaustausch erfolgt hier über standardisierte Protokolle. Die über die Dienste des Servers 4 bereitgestellten Informationen werden dann auf den Datenhandgeräten 7 angezeigt. Zugleich kann der Server 4 die Befehle und Daten, die auf den Datenhandgeräten 7 eingegeben werden, auf dem gleichen Weg entgegennehmen und bearbeiten.

Neben dem lokalen WLAN-Netzwerk mit eigenem Server und Intranet zur drahtlosen Kommunikation sind verschiedene weitere Funkinfrastrukturen verwendbar, z.B. ein globales GPRS-(Handy)-Netzwerk mit einem zentralen Server, auf den über das Internet und/oder ein VPN (Virtual Private Network) zugegriffen wird. Die Datenhandgeräte 7 sind gegebenenfalls Mobiltelefone oder mit GPRS-Empfängern und -Sendern ausgerüstete PDAs od. dgl. und empfangen von einem zentralen Server über das GPRS-(Handy)-Netz lokal begrenzt Datenströme und weitere Daten. Die Funkinfrastruktur kann so ausgelegt sein, daß der Ort jedes Datenhandgeräts 7 im Raumbereich 1 eindeutig feststellbar ist. Im Fall einer vorübergehenden Störung der Serververbindung können die Dienste jedoch temporär auch auf den Datenhandgeräten 7 ablaufen.

Andere Protokolle und Funkinfrastrukturen sind ebenfalls verwendbar. Zudem ist bei einem Mischbetrieb, bei dem mehrere Protokolle und/oder Funkinfrastrukturen innerhalb des Raumbereichs 1 oder mehrerer getrennter Raumbereiche gleichzeitig verwendet werden, der Einsatzbereich erheblich vergrößert. So können die Datenhandgeräte 7 im Seniorenheim 2 auf WLAN-Basis und bei der häuslichen Pflege über das GPRS-Netz mit dem Server 4 kommunizieren.

Die Kommunikation zwischen den Datenhandgeräten 7 und dem Server 4 erfolgt zweckmäßigerweise bidirektional. Dadurch können die Datenhandgeräte 7 auf Dienste und Daten des Servers 4 zugreifen, und der Server 4 kann insbesondere zur Alarmierung von Pflegepersonal eines oder mehrere der Datenhandgeräte 7 unaufgefordert mit Informationen versorgen. Hierzu sind die zweckmäßigerweise eine eindeutige Kennung aufweisenden Datenhandgeräte 7 mit einer Funktionalität zur akustischen und/oder optischen Anzeige einer derartigen Alarmierung ausgestaltet. Ist der Ort der Datenhandgeräte 7 im Raumbereich 1 durch entsprechende Ausgestaltung der Funkinfrastruktur feststellbar, kann die Auswahl des zu alarmierenden Pflegers anhand der örtlichen Nähe zum Einsatzort erfolgen. Zudem basiert die Auswahl zweckmäßigerweise auf einem im Server 4 gespeicherten Profil.

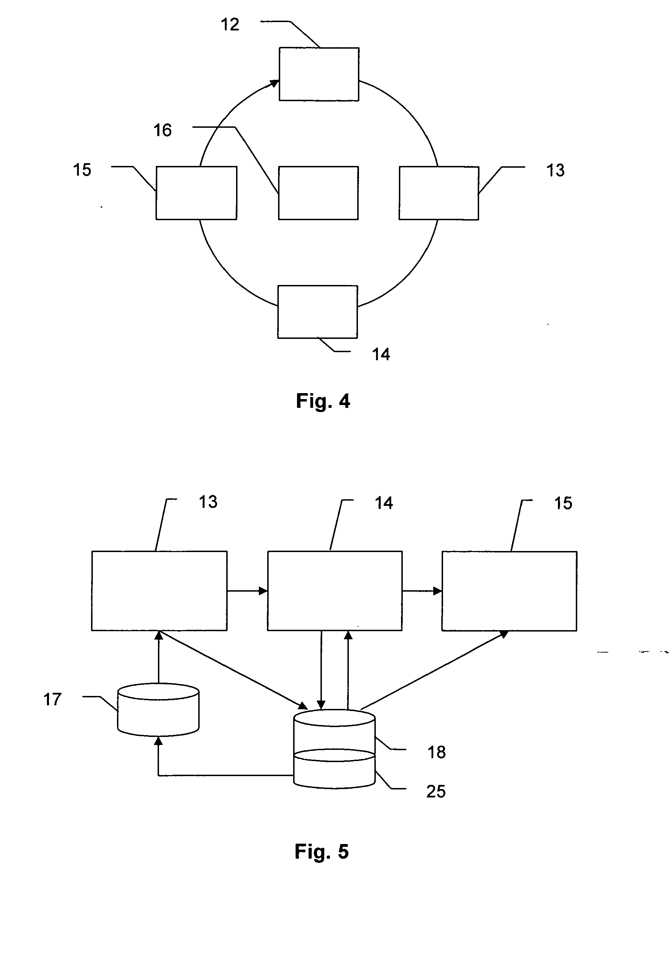

Die Verfahrensabläufe im Seniorenheim 2 umfassen hier zweckmäßigerweise eine Informationssammlung 12, eine Pflegeplanung 13, eine Leistungserbringung 14, eine Evaluation 15 und/oder eine Auswertung 16, vgl. Fig. 4.

Bei der Informationssammlung 12 werden beispielsweise die Stammdaten über TabletPCs erfaßt.

Zur Pflegeplanung 13 bedienen sich die Mitarbeiter zweckmäßigerweise ebenfalls der TabletPCs und greifen, vgl. Fig. 5, auf einen zentralen System katalog 17 des Servers 4 zu, in dem beispielsweise nach dem AEDL-Pflegemodell strukturiert abrufbare Tätigkeiten gespeichert sind. Computergestützt werden die einzelnen Bereiche des AEDL-Pflegemodells abgearbeitet, um Probleme zu erfassen, Ressourcen, Ziele und Maßnahmen zu definieren und katalogbasiert entsprechende Tätigkeiten auszuwählen und gegebenenfalls mit Ausführungshinweisen zu ergänzen. So werden individuelle Aufgabenpläne 18 für die Personen zusammengestellt.

Für die Leistungserbringung 14 bedienen sich die Mitarbeiter der ständig mitgeführten Datenhandgeräte 7, um die jeweils auszuführenden Tätigkeiten abzurufen und zu protokollieren, sowie Bemerkungen, insbesondere handschriftlich, über eine Schrifterkennung zu verfassen.

Hierzu wird auf die im Server 4 gespeicherten individuellen Aufgabenpläne 18 beispielsweise wie folgt zugegriffen. Beim Betreten des Zimmers eines Seniors ruft der jeweilige Mitarbeiter, der sich zweckmäßigerweise am mitgeführten Datenhandgerät 7 beispielsweise über einen Code identifiziert hat, einen den Senior betreffenden Datensatz beim Server 4 ab. Dies kann durch Eingabe der Zimmernummer, des Namens oder gegebenenfalls Erfassen eines im Zimmer oder beim Senior angeordneten RFID-Transponders erfolgen. Der Mitarbeiter erhält damit Kenntnis über den Namen und eventuelle Erkrankungen des Seniors. Auf dem Display 10 des Datenhandgeräts 7 werden daraufhin zweckmäßigerweise ein Bild 19 des Seniors, ein Bild 20 des Mitarbeiters und der Name und weitere wichtige Informationen 21 angezeigt, vgl. Fig. 3. Der Server 4 stellt unter Berücksichtigung des Profils des betätigenden Mitarbeiters eine Liste auszuführender Tätigkeiten für eine Anzeige auf dem Display 10 des Datenhandgeräts 7 bereit. Ist der Mitarbeiter beispielsweise eine Pflegekraft, werden die Tätigkeiten, die durch Pflegekräfte durchzuführen sind, bereitgestellt, während dann, wenn der Mitarbeiter beispielsweise ein Physiotherapeut ist, nur Tätigkeiten bereitgestellt werden, die durch Physiotherapeuten durchgeführt werden.

Die Tätigkeiten werden vorzugsweise in Zeilen 22 angezeigt, wobei hier offene Tätigkeiten beispielsweise grau, erledigte Tätigkeiten grün und unerledigte Tätigkeiten rot markiert und zweckmäßigerweise sortiert werden. Dabei wird eine der Tätigkeit zugeordnete Priorität bei einer Sortierung berücksichtigt. Der Tätigkeit ist ein Zeitfenster zugeordnet, in dem die Tätigkeit zu erbringen ist, was ebenfalls bei einer Sortierung der Tätigkeiten berücksichtigt wird. Durch die Angabe eines Zeitfensters ist eine Flexibilität des Ausführungszeitpunkts gewährleistet, so daß auf vorrangigere Tätigkeiten reagiert werden kann.

Die Tätigkeiten umfassen beispielsweise Grundwäsche, Ausscheidung kontrollieren, Medizin verabreichen usw.. Nachdem eine Tätigkeit durchgeführt worden ist, ändert der Mitarbeiter den jeweiligen Status. Hierzu wählt er durch Antippen der berührungsempfindlichen Oberfläche des Displays mit dem Stift 11 die Schaltfläche 23 "erledigt" oder die Schaltfläche 24 "unerledigt" aus, oder betätigt gegebenenfalls entsprechende feste oder frei belegbare Tasten. Die Eingabe wird automatisch betreffend Zeitpunkt und Pflegekraft protokolliert und an den Server 4 weitergeleitet. Ab diesem Zeitpunkt steht sie allen anderen Mitarbeitern zum Abruf zur Verfügung. Gegebenenfalls können zusätzlich durchgeführte Tätigkeiten eingegeben und zur Änderung des Aufgabenplans Vorschläge im Server 4 gespeichert bzw. bei ausreichender Autorisierung des Mitarbeiters der Aufgabenplan direkt geändert werden. Wenn sich ein Problem ergibt, kann der Mitarbeiter direkt auf weitere im Server 4 gespeicherte Informationen, beispielsweise ältere Befunde od.dgl., betreffend den Senior zugreifen, um das Problem vor Ort zu lösen oder Hilfe anfordern, insbesondere einen Alarm absetzen. Nach Abschluß des Aufgabenplans für den Senior kann der Mitarbeiter über das mitgeführte Datenhandgerät 7 seinen nächsten Einsatz abfragen. Die Pflegemaßnahmen sind damit individuell vorgegeben, werden automatisch auch hinsichtlich des Zeitpunkts protokolliert und können von der Pflegekraft insbesondere handschriftlich und/oder durch eine Sprachnotitz kommentiert und gegebenenfalls direkt an geänderte Bedingungen angepaßt werden. Gegebenenfalls können hierbei auch Ergänzungen 25, vgl. Fig. 5, für den individuellen Aufgabenplan 18 erstellt werden, die, sofern sie noch nicht im Systemkatalog 17 enthaltene Tätigkeiten umfassen, bei Bedarf direkt oder später bei der Auswertung auch in den Systemkatalog 17 einpflegbar sind.

Wenn die Pflegekraft bzw. der Mitarbeiter mindestens eine Tätigkeit im Datenhandgerät 7 als erledigt eingibt, wird der Zeitpunkt, an dem die Eingabe erfolgt, ermittelt und in einem Datensatz zusammen mit der Tätigkeit abgelegt. Es kann dabei vorkommen, daß Mitarbeiter mehrere Tätigkeiten in einem engen Zeitraum oder zeitgleich eingeben. Diese in dem engen Zeitraum eingegebenen Tätigkeiten können in einem zeitlichen als auch in einem sachlichen Zusammenhang stehen, indem beispielsweise wechselweise in einem Doppelzimmer mit zwei Bewohnern gearbeitet und eine Tätigkeit verrichtet wird.

Eine als erledigt eingegebene Tätigkeit kann als Dokumentationsmaßnahme definiert werden, die zu einem bestimmten Zeitpunkt an einem bestimmten Objekt bzw. einem Bewohner durchgeführt wurde und als Tätigkeit eindeutig definiert werden kann. Dokumentationsmaßnahmen können als Datensätze in einer Datenbank abgelegt werden. Zweckmäßigerweise enthält ein Datensatz in der Datenbank einer durch eine Eingabe als erledigt eingegebenen Tätigkeit die Benennung der Tätigkeit, den Zeitpunkt der Eingabe, die Kennung des Objekts bzw. des Bewohners an dem die Tätigkeit durchgeführt wurde, die Kennung des eingebenden Mitarbeiters und eine Kennung eines der Tätigkeit korrespondierenden Eintrags im System katalog 17. Ferner können die Datensätze weitere Parameter bzw. Werte enthalten, die bei einer Auswertung hinsichtlich bestimmter Fragestellungen oder der Suche nach funktionalen Abhängigkeiten verwendet werden können. Als Beispiele für Parameter sind die Übernahmeform der Tätigkeit und die Pflegestufe des Bewohners genannt.

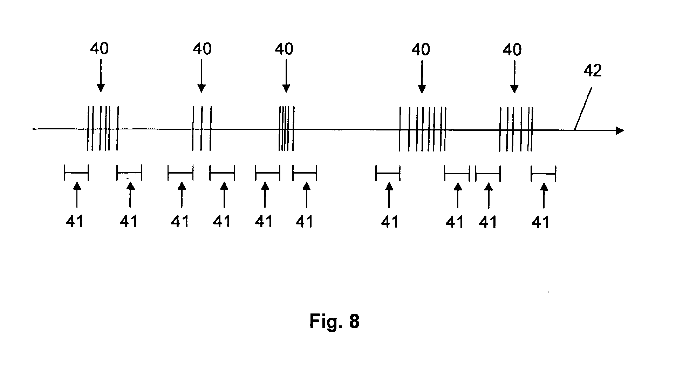

Aus den Datensätzen ist eine Ermittlung der Ausführungsdauer von Tätigkeiten möglich. In Fig. 8 sind Eingaben eines Mitarbeiters von erledigten Tätigkeiten auf einem Zeitstrahl 42 gezeigt. Die senkrechten Striche, die den Zeitstrahl 42 schneiden, geben den Zeitpunkt der Eingabe der durch den Mitarbeiter erledigten Tätigkeit an. Zur Ermittlung der Ausführungsdauer von Tätigkeiten wird eine Blockbildung in Blöcke 40 von Dokumentationsmaßnahmen durchgeführt. In einen Block 40 werden Datensätze, deren Zeitpunkte in einem einstellbaren engen Zeitraum 41 von wenigen Minuten liegen und die gleiche Kennung des Mitarbeiters aufweisen, eingeteilt. Startpunkt des Blocks 40 ist jede Dokumentationsmaßnahme, zu deren Zeitpunkt es in dem einstellbaren Zeitraum 41 keinen früheren Eintrag in der Datenbank gibt. Alle Dokumentationsmaßnahmen, die später dokumentiert bzw. als erledigt eingegeben wurden und einen Vorgänger aus einem Block 40 in dem Zeitraum 41 haben, werden zu dem Block 40 gezählt. Endpunkt eines Blocks 40 ist die Dokumentationsmaßnahme, die sinngemäß keinen Nachfolger innerhalb des Zeitraums 41 hat.

Bei der Blockbildung kann es auch vorgesehen sein, daß über die Parameter der Datensätze eine Filterung der Datensätze durchgeführt wird, indem die Datensätze bzw. Tätigkeiten aus dem Block 40 herausgenommen werden, wenn ein Parameter des Datensatzes einem vorgegebenen Wert entspricht.

Die Gesamtausführungsdauer der Tätigkeiten für einen betrachteten Block 40 kann aus der Differenz des Zeitpunkts der ersten Dokumentationsmaßnahme des betrachteten Blocks 40 und des Zeitpunkts der letzten Dokumentationsmaßnahme des Blocks 40, der dem betrachteten Block 40 vorangeht, berechnet werden. Es kann eine lineare Gleichung aufgestellt werden, bei der eine Summe der in dem betrachteten Block 40 als erledigt eingegebenen Tätigkeiten, die als Variablen in die Gleichung eingehen, die Summe der Gesamtausführungsdauer der Tätigkeiten des betrachteten Blocks 40 ergibt. Dabei wird angenommen, daß gleiche Tätigkeiten in dem betrachteten Block 40 gleich lange dauern.

Für jeden Block kann eine lineare Gleichung aufgestellt werden. Es ergibt sich ein lineares Gleichungssystem, das nach den einzelnen Variablen für die Tätigkeiten aufgelöst werden kann und sich somit die Ausführungsdauer für die Tätigkeiten rechnerisch ergibt.

Es kann passieren, daß es Gleichungen mit gleichen Tätigkeiten, jedoch unterschiedlichen Gesamtausführungsdauern gibt, was daran liegt, daß die Tätigkeit von Menschen ausgeführt wird, die sich beispielsweise bei der Durchführung der Tätigkeit ablenken lassen. In einem solchen Fall existiert zu diesem linearen Gleichungssystem keine Lösung. Da jedoch nicht die Ausführungsdauer für eine an einem bestimmten Zeitpunkt durchgeführte Tätigkeit ermittelt werden soll, sondern wie lange die Erledigung einer Tätigkeit im Mittel dauert, können die Gleichungen mit identischen Tätigkeiten zusammengefaßt werden, indem über die Gesamtausführungsdauer das arithmetische Mittel gebildet wird. Hierdurch werden ofensichtliche Widersprüche eliminiert und die Zahl der Gleichungen des linearen Gleichungssystems erheblich reduziert.

Zur Lösung des linearen Gleichungssystems können ferner Verfahren zur Reduktion der Gleichungen und Standardverfahren zur Lösung des Gleichungssystems verwendet werden.

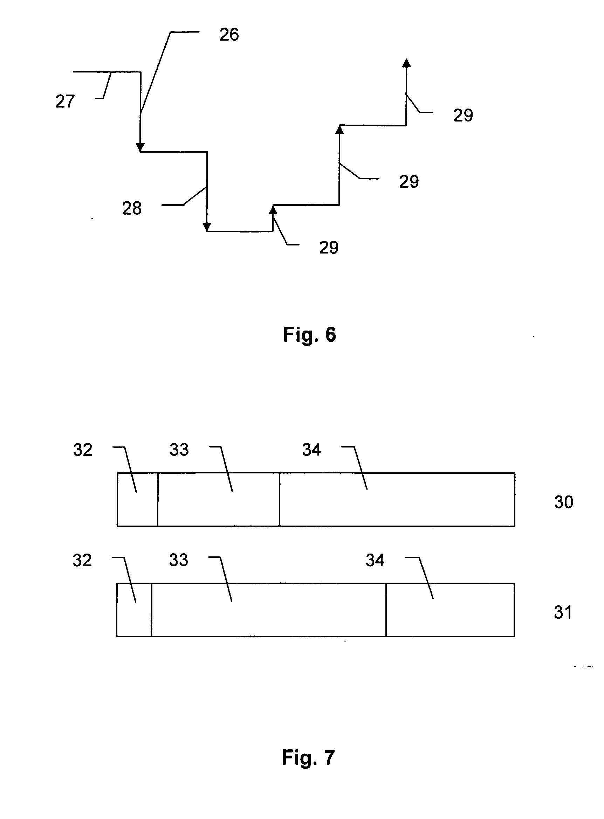

In regelmäßigen Abständen findet die Evaluation 15 statt, bei der die Pflegemaßnahmen insbesondere in Bezug auf ihre Wirksamkeit ausgewertet und die Ziele überprüft werden. Der gesamte Datenbestand kann dazu insbesondere nach graphischer Aufbereitung verwendet werden. So kann z.B. jederzeit die Anzahl der erreichten Ziele mit den nicht erreichten Zielen als Indiz für die Zweckmäßigkeit der Tätigkeiten in Beziehung gesetzt werden. Im in Fig. 6 dargestellten Beispiel illustriert der Pfeil 26, daß am Ende eines Beobachtungszeitraums 27 mehr Ziele nicht erreicht werden konnten. Gleiches gilt für den Pfeil 28 am Ende des nachfolgenden Beobachtungszeitraums. Nach Ausarbeitung eines angepaßten Pflegeplans ist die Bilanz wieder positiv, vgl. die Pfeile 29. Mit einer derartigen graphischen Darstellung ist eine Maßnahmeneffektivität überprüfbar.

Zur automatisierten Auswertung 16 wird auf die im Server 4 gespeicherten Daten zugegriffen. Die Auswertung 16 erfolgt dabei zweckmäßigerweise über TabletPCs. Hier können Schichten unter Berücksichtigung der erledigten und offenen Tätigkeiten und besonderen Ereignisse ausgewertet werden, eine Schichtübergabe vorgenommen werden, ausführliche Berichte geschrieben und gegebenenfalls Überleitungsbögen an ein Krankenhaus erstellt werden.

Die Berichte werden dabei zweckmäßigerweise computergestützt verfaßt. Zu den Bemerkungen werden unter Berücksichtigung der jeweiligen Tätigkeit, zu der sie vom Mitarbeiter verfaßt worden sind, in einem Dokumentierungskatalog gespeicherte passende Textbausteine vorgeschlagen, die gegebenenfalls nach Ergänzung oder Anpassung in den Bericht übernommen werden.

Ferner können die Tätigkeitsverteilung in Echtzeit analysiert und der Mitarbeitereinsatz optimiert werden, vgl. Fig. 7. Hier ist für zwei Abteilungen 30, 31 der Prozentsatz der unerledigten 32, der erledigten 33 und der noch offenen 34 Tätigkeiten graphisch dargestellt. Es ist ersichtlich, daß aus der Abteilung 31 Mitarbeiter abgezogen und in der Abteilung 30 eingesetzt werden können. Da alle Informationen betreffend offene Aufgaben in Echtzeit verfügbar sind und die Aufgabenpläne automatisch erzeugt und angezeigt werden, können die Mitarbeiter sofort in der neuen Abteilung 30 tätig werden.

Der Server 4 kann ferner an ein Materialverwaltungssystem angeschlossen sein oder die entsprechende Funktionalität selbst bereit stellen, um basierend auf den protokollierten und/oder geplanten Pflegemaßnahmen Materialbestellungen durchzuführen. Schließlich kann die geleistete Arbeit automatisiert abgerechnet werden.

Ein weiteres Einsatzgebiet der Erfindung sind Baustellen, insbesondere Großbaustellen. Hier sind mehrere Arbeiter mit verschiedenen Profilen gleichzeitig tätig, um eine Vielzahl von Arbeiten durchzuführen, die jeweils eine entsprechende Qualifikation erfordern und gegebenenfalls in einer bestimmten Reihenfolge erledigt werden müssen. Erfindungsgemäß erfolgt eine Koordination der Arbeiter, eine Kontrolle des Baufortschritts, eine Materialbeschaffung usw. mittels der tragbaren elektrisch selbstversorgten Datenhandgeräte auf ähnliche Weise wie im Fall des Seniorenheims.

So werden in einer Planungsphase Arbeitsabläufe gewerkebezogen und -übergreifend sowie qualifikationsbezogen und -übergreifend durch beteiligte Fachplaner unter Rückgriff auf einen Systemkatalog computergestützt geplant.

Vorarbeiter oder andere autorisierte Mitarbeiter rufen dann an mitgeführten Multimediahandgeräten Aufgabenlisten ab, die bezogen auf die jeweilige Qualifikation der betroffenen Mitarbeiter sowie den Baufortschritt und die Zeit automatisch aus den Arbeitsabläufen generiert werden. Durchgeführte Arbeiten werden als erledigt markiert und in Angriff genommene Arbeiten können mit einem Arbeitsstandindikator versehen werden, der den Fortschritt der jeweiligen Aufgabe anzeigt. Können Aufgaben nicht erledigt werden, oder treten bei deren Durchführung Probleme auf, z.B. Paß- oder Meßungenauigkeiten, Verzögerungen, Schäden etc., wird dies entsprechend protokolliert. Ferner kann eine Teil- oder Vollabnahme oder gegebenenfalls Mängelrüge einzelner Arbeiten erfolgen.

Die automatische flexible Zuordnung von Aufgaben zu Mitarbeitern gestattet eine effizientere Nutzung der Mitarbeiter auf der Baustelle. Der Leistungsstand kann kontrolliert, Mängel und Probleme können durch Auswerten der Kommentare erkannt, und eine detaillierte Abrechnung der durchgeführten Arbeiten kann erleichtert werden. Die Erfindung ermöglicht somit eine Auswertung des Baufortschritts in Echtzeit. Zudem können Materiallieferungen entsprechend dem Baufortschritt just-in-time erfolgen. Hierbei werden Fehler durch fehlerhafte oder fehlende Weitergabe von Informationen vermieden.

## Patentansprüche

1. Verfahren zum Planen und Erfassen von an unterschiedlichen Objekten von Mitarbeitern auszuführenden Tätigkeiten in Echtzeit, insbesondere in einem Alten- oder Pflegeheim, bei dem
für jeden Mitarbeiter und für jede Tätigkeit jeweils ein Profil in einem Server (4) gespeichert wird, das die Berechtigung des Mitarbeiters für bestimmte Tätigkeiten bzw. Anforderungen an die Berechtigung des Mitarbeiters beschreibt,
Aufgabenpläne für durchzuführende Tätigkeiten entsprechend vorbestimmten Vorgaben computerunterstützt erstellt und im Server (4) gespeichert werden,
an einem Eingabegerät (7) mit einem Display (10) und einer Dateneingabevorrichtung offene Tätigkeiten des jeweiligen Aufgabeplans im Display (10) entsprechend dem Profil des betätigenden Mitarbeiters, dem Profil der Tätigkeiten und dem Abarbeitungsstatus aufgerufen und anzeigt werden, und
von betätigenden Mitarbeitern mindestens eine durchgeführte Tätigkeit als Erledigung in das Eingabegerät (7) eingegeben, im Display (10) angezeigt, an den Server (4) weitergeleitet und dort dokumentarisch abgelegt werden,
**dadurch gekennzeichnet, daß**
die vorbestimmten Vorgaben der durchzuführenden Tätigkeiten ein den Tätigkeiten zugeordnetes Zeitfenster und eine den Tätigkeiten zugeordnete Priorität umfassen, die in einer Datenbank abgelegt sind, und
als Eingabegerät (7) für jeden Mitarbeiter ein mitgeführtes, elektrisch selbstversorgtes, drahtlos mit dem Server (4) kommunizierendes Datenhandgerät (7) bereitgestellt wird, und
für eine drahtlose Kommunikation zwischen den Datenhandgeräten (7) und dem Server (4) ein lokales mindestens am Ort der Tätigkeit vorhandenes Funknetz verwendet wird, und
ein die mindestens eine bei der Eingabe als erledigt eingegebene Tätigkeit umfassender Datensatz gebildet wird, der den Zeitpunkt der Eingabe für die mindestens eine Tätigkeit enthält, wobei die von einem Mitarbeiter als erledigt in das Datenhandgerät mindestens eine Tätigkeit anderen Mitarbeitern bei entsprechendem objektbezogenem Aufruf zur Verfügung gestellt wird.

2. Verfahren nach Anspruch 1, **dadurch gekennzeichnet, daß** bei der Bildung des Datensatzes eine Kennung für den betätigenden Mitarbeiter aufgenommen wird.

3. Verfahren nach Anspruch 1 oder 2, **dadurch gekennzeichnet, daß** bei der Bildung des Datensatzes Parameter aufgenommen werden, die zur Filterung der Datensätze verwendbar sind.

4. Verfahren nach einem der Ansprüche 1 bis 3, **dadurch gekennzeichnet, daß** als Zeitfenster ein Zeitbereich von mehreren Minuten oder Stunden verwendet wird.

5. Verfahren nach einem der Ansprüche 1 bis 4, **dadurch gekennzeichnet, daß** ein lineares Gleichungssystem auf der Basis der Datensätze der als erledigt eingegebenen Tätigkeiten und der Zeitpunkte aufgestellt wird, und eine mittlere Ausführungsdauer für Tätigkeiten aus dem Gleichungssystem berechnet wird.

6. Verfahren nach einem der Ansprüche 1 bis 5, **dadurch gekennzeichnet, daß** die Tätigkeiten eines Aufgabenplans in Zeilen (20) angezeigt werden, die bei offenen Tätigkeiten in einer neutralen ersten Farbe, insbesondere schwarz oder grau, bei erledigten Tätigkeiten in einer zweiten Farbe, insbesondere grün, und bei unerledigten Tätigkeiten in einer dritten Farbe, insbesondere rot, markiert werden.

7. Verfahren nach einem der Ansprüche 1 bis 6, **dadurch gekennzeichnet, daß** einer Tätigkeit Bemerkungen handschriftlich und/oder als Sprachnotiz hinzugefügt werden.

8. Verfahren nach einem der Ansprüche 1 bis 7, **dadurch gekennzeichnet, daß** auf Basis der dokumentarisch im Server (4) abgelegten Eingaben der Fortschritt der Abarbeitung der Aufgabenpläne für Objekte entsprechend vorgegebenen Kriterien, beispielsweise nach räumlicher Anordnung, in einer Graphik auf einem Datenhandgerät (7) angezeigt wird.

9. Verfahren nach einem der Ansprüche 1 bis 8, **dadurch gekennzeichnet, daß** den Objekten von den Datenhandgeräten (7) abfragbare Transponder zugeordnet werden.

10. Verfahren nach einem der Ansprüche 1 bis 9, **dadurch gekennzeichnet, daß** der Ort der Datenhandgeräte (7) festgestellt wird.

11. Verfahren nach einem der Ansprüche 1 bis 10, **dadurch gekennzeichnet, daß** der Server (4) zum Alarmieren eines Datenhandgeräts (7) unaufgefordert Daten an das Datenhandgerät (7) sendet.

12. System zum Planen und Erfassen von an unterschiedlichen Objekten von Mitarbeitern auszuführenden Tätigkeiten in Echtzeit, insbesondere in einem Alten- oder Pflegeheim, bei dem
ein Server (4) mit jeweils einem Profil für jeden Mitarbeiter und für jede Tätigkeit, das die Berechtigung des Mitarbeiters für bestimmte Tätigkeiten bzw. Anforderungen an die Berechtigung des Mitarbeiters beschreibt, und mit entsprechend vorbestimmten Vorgaben computerunterstützt erstellten Aufgabenplänen für durchzuführende Tätigkeiten vorgesehen ist,
ein Eingabegerät (7) mit einem Display (10) und einer Dateneingabevorrichtung vorgesehen ist, an dem offene Tätigkeiten des jeweiligen Aufgabeplans im Display (10) entsprechend dem Profil des betätigenden Mitarbeiters, dem Profil der Tätigkeiten und dem Abarbeitungsstatus aufrufbar und anzeigbar sind, und
die Eingabegeräte (7) zum Anzeigen und Weiterleiten an den Server (4) von betätigenden Mitarbeitern als Erledigung mindestens einer in das Datenhandgerät eingegebenen durchgeführten Tätigkeit ausgestaltet sind, und der Server (4) Mittel zum dokumentarischen Ablegen der Eingaben aufweist,
**dadurch gekennzeichnet, daß**
eine Datenbank vorgesehen ist, in der die vorbestimmten Vorgaben der durchzuführenden Tätigkeiten ein den Tätigkeiten zugeordnetes Zeitfenster und eine den Tätigkeiten zugeordnete Priorität umfassen, die in einer Datenbank abgelegt sind,
und als Eingabegeräte (7) für jeden Mitarbeiter ein mitführbares, elektrisch selbstversorgtes, zur drahtlosen Kommunikation mit dem Server (4) ausgelegtes Datenhandgerät vorgesehen ist, und für die drahtlose Kommunikation zwischen den Datenhandgeräten und dem Server (4) ein lokales mindestens am Ort der Tätigkeiten vorhandenes Funknetz vorhanden ist,
wobei der Server (4) so ausgestaltet ist, daß von einem Mitarbeiter als durchgeführt in ein Datenhandgerät mindestens eine eingegebene Tätigkeit anderen Mitarbeitern bei entsprechendem objektbezogenem Aufruf zur Verfügung gestellt wird und ein Datensatz erzeugbar ist, der den Zeitpunkt der Eingabe für die mindestens eine Tätigkeit enthält.

13. System nach Anspruch 12, **dadurch gekennzeichnet, daß** der Server (4) so ausgestaltet ist, daß bei der Bildung des Datensatzes eine Kennung für den betätigenden Mitarbeiter aufgenommen wird.

14. System nach Anspruch 12 oder 13, **dadurch gekennzeichnet, daß** der Server (4) so ausgestaltet ist, daß bei der Bildung des Datensatzes Parameter aufgenommen werden, die zur Filterung der Datensätze verwendbar sind.

15. System nach einem der Ansprüche 12 bis 14, **dadurch gekennzeichnet, daß** ein zentraler System katalog (12) mit strukturiert abrufbaren Tätigkeiten zum Zusammenstellen der Aufgabenpläne vorgesehen ist.

16. System nach einem der Ansprüche 12 bis 15, **dadurch gekennzeichnet, daß** es zum optisch unterschiedlichen Anzeigen offener, erledigter und unerledigter Tätigkeiten ausgestaltet ist.

17. System nach einem der Ansprüche 12 bis 16, **dadurch gekennzeichnet, daß** es zum Anzeigen der Tätigkeiten eines Aufgabenplans in Zeilen (20) derart ausgestaltet ist, daß die offenen Tätigkeiten in einer ersten Farbe, insbesondere schwarz oder grau, die erledigten Tätigkeiten in einer zweiten Farbe, insbesondere grün, und die unerledigten Tätigkeiten in einer dritten Farbe, insbesondere rot, markiert sind.

18. System nach einem der Ansprüche 12 bis 17, **dadurch gekennzeichnet, daß** die Dateneingabevorrichtung eine Handschrifterkennung und/oder eine akustische Aufnahmevorrichtung zum Erfassen einer Bemerkung aufweist.

19. System nach einem der Ansprüche 12 bis 18, **dadurch gekennzeichnet, daß** den Objekten von den Datenhandgeräten abfragbare Transponder zugeordnet sind.

20. System nach einem der Ansprüche 12 bis 19, **dadurch gekennzeichnet, daß** der Ort der Datenhandgeräte (7) feststellbar ist.

21. System nach einem der Ansprüche 12 bis 20, **dadurch gekennzeichnet, daß** der Server (4) zum unaufgeforderten Senden von Daten an das Datenhandgerät (7) ausgestaltet ist.

22. Elektrisch selbstversorgtes Datenhandgerät (7) mit einem Display (10) und einer Dateneingabevorrichtung zur drahtlosen Kommunikation mit dem System nach einem der Ansprüche 12 bis 21, das zum Anzeigen der offenen Tätigkeiten eines Aufgabenplans eines das Datenhandgerät (7) mitführenden und dieses objektbezogen aufrufenden Mitarbeiters entsprechend dem Profil des betätigenden Mitarbeiters, dem Profil der Tätigkeiten und entsprechend dem Abarbeitungsstatus, und zum drahtlosen Weiterleiten mittels der Dateneingabevorrichtung vom betätigenden Mitarbeiter als durchgeführt eingebbarer Tätigkeiten an einen Server (4) zum dokumentarischen Ablegen darin ausgestaltet ist.
